# EUROPEAN PATENT SPECIFICATION

(11) **EP 0 485 926 B1**
(45) Date of publication and mention of the grant of the patent: **16.04.1997**
(21) Application number: 91119180.7
(22) Date of filing: 11.11.1991
(51) Int. Cl.: H04L 5/14, H04B 3/14

(54) **Constant-absorption circuit for the bidirectional transfer of an alternating signal**
Schaltung mit konstanter Absorption für bidirektionale Übertragung eines Wechselstromsignals
Circuit à absorption constante pour le transfert bidirectionnel d'un signal alternatif

(30) Priority: 15.11.1990 IT 2206190
(43) Date of publication of application: 20.05.1992
(73) Proprietor: SGS-THOMSON MICROELECTRONICS S.r.l., 20041 Agrate Brianza (Milano) (IT)
(72) Inventor: Consiglio, Pietro, I-20141 Milano (IT); Antonini, Carlo, I-21040 Venegono Inferiore (Varese) (IT)
(74) Representative: Modiano, Guido, Dr.-Ing.

(56) References cited:
- EP-A- 0 139 230
- WO-A-86/07508
- DE-A- 2 708 671
- US-A- 4 101 851
- PATENT ABSTRACTS OF JAPAN vol. 7, no. 288 (E-218)(1433) & JP-A-58 165 413

## Description

The present invention relates to a constant-absorption circuit for the bidirectional transfer of an alternating signal.

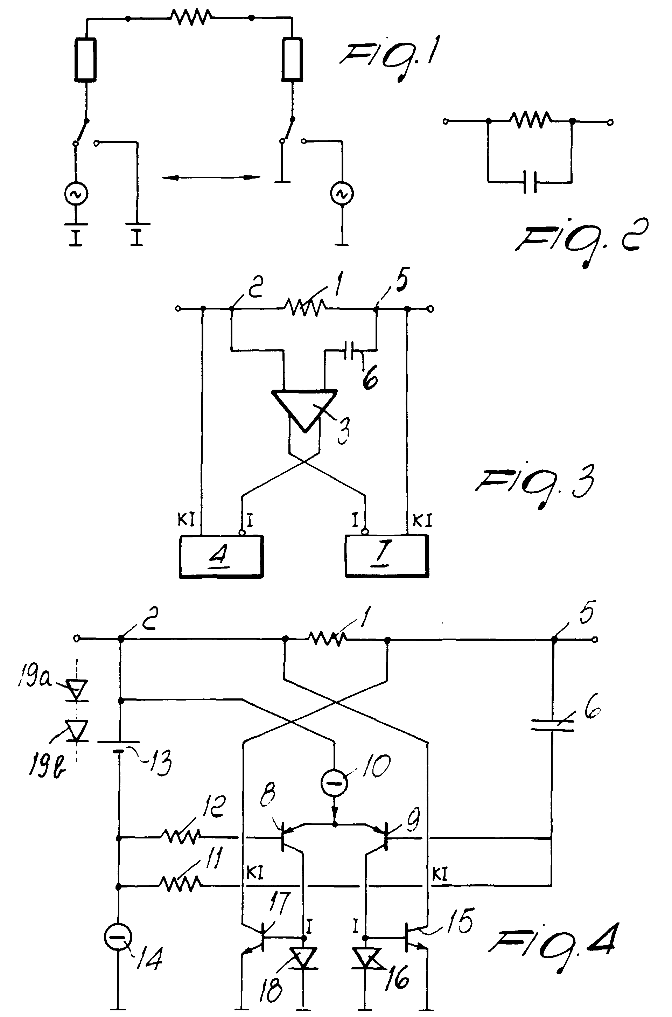

Sometimes, in various devices, such as for example telephone devices, it is necessary to transfer, without attenuation, the alternating signal which is present at one terminal of a resistor to the other terminal of said resistor, independently both of direct-current drop and of the termination networks. Such a circuit is shown in figure 1.

A known solution is the one illustrated in figure 2, wherein a capacitor is arranged in parallel to the resistor. As the value of the resistance of the resistor decreases, it is necessary to increase the capacitance of the capacitor in order to obtain a substantially constant frequency response with minimum attenuation.

The increase in the capacitance of the capacitor thus leads to the use of electrolytic capacitors which have an unfortunately low reliability, complicating biasing and increasing the costs of the circuit.

There are in fact many examples in which it is necessary to increase the value of the capacitance in order to integrate particular functions executed monolithically, such as for example filtering, compensation and the like.

The aim of the present invention is to eliminate or substantially reduce the disadvantages described above by providing a constant-absorption circuit for the bidirectional transfer of an alternating signal, which eliminates the use of electrolytic capacitors for transferring the signal from one terminal to the other of the resistor.

Within the scope of this aim, an object of the present invention is to provide a bidirectional transfer circuit which is more reliable than known circuits.

Not least object of the present invention is to provide a bidirectional transfer circuit which is relatively easy to manufacture, can be easily integrated and at competitive costs.

This aim, these objects and others which will become apparent hereinafter are achieved by a constant-absorption circuit for the bidirectional transfer of an alternating signal according to the invention, characterized in that it comprises a resistor having a first terminal which is connected to a first input of a differential amplifier and to an output of a first current mirror, said resistor having a second terminal which is connected to a capacitor which has a terminal connected to a second input of said differential amplifier, said resistor being connected, by means of said second terminal, to the output of a second current mirror, said differential amplifier having a first output connected to an input terminal of said second current mirror and having a second output connected to an input terminal of said first current mirror, said differential amplifier, in cooperation with said first and second current mirrors, being suitable for transferring an alternating signal from the first terminal to the second terminal of said resistor without attenuation and vice versa.

Further characteristics and advantages of the invention will become apparent from the description of a preferred but not exclusive embodiment of a constant-absorption circuit for the bidirectional transfer of an alternating signal according to the invention, illustrated only by way of non-limitative example in the accompanying drawings, wherein:
figure 1 is an illustrative example of a bidirectional transfer circuit;
figure 2 is a circuit diagram of a known bidirectional transfer unit;
figure 3 is a block diagram of a constant-absorption bidirectional transfer circuit according to the invention; and
figure 4 is a circuit diagram of the circuit according to the invention.

With reference to figures 3 and 4, a constant-absorption circuit for the bidirectional transfer of an alternating signal comprises a resistor 1, having a first terminal 2 which is connected to a first input of a differential amplifier 3 and to an output of a first current mirror 4.

The resistor 1 has a second terminal 5 which is connected to a capacitor 6. Said capacitor has a terminal connected to a second input of the differential amplifier 3.

The resistor 1 is connected, by means of the second terminal 5, to the output of a second current mirror 7. The differential amplifier 3 has a first output connected to an input terminal of the second current mirror 7 and has a second output connected to an input terminal of the first current mirror 4.

The differential amplifier 3, in cooperation with the first current mirror 4 and the second current mirror 7, transfers a signal from the first terminal 2 to the second terminal 5 of the resistor 1 without attenuation.

The differential amplifier 3 comprises, as illustrated in figure 4, a first PNP transistor 8 and a second PNP transistor 9, the respective emitter terminals whereof constitute a node which is connected to the first terminal 2 by means of a first current source 10.

The base terminal of the first transistor 8 is connected to the first terminal 2 by means of a first biasing resistor 12, whereas the collector terminal of the first transistor 8 is connected to an input terminal of the second current mirror 7, as more clearly explained hereinafter.

The base terminal of the second transistor 9 is connected to the first terminal 2 by means of a second biasing resistor 11 and is connected to the second terminal 5 through the capacitor 6.

The collector terminal of the second transistor 9 is connected to the input of the first current mirror 4, as more clearly explained hereinafter. There is a voltage source 13 arranged between the first and second biasing resistors 11 and 12 and the first terminal 2, and there is a second current source 14 arranged between the first and second biasing resistors 11 and 12 and the ground.

The first current mirror 4 comprises an input which is composed of a node which is constituted by the base terminal of a third NPN transistor 15 and by the anode of a first diode 16; said diode has its cathode connected to the ground. The third transistor 15 has its collector terminal connected to the first terminal 2 and its emitter terminal connected to the ground.

The second current mirror 7 comprises an input which is composed of a node which is constituted by the base terminal of a fourth NPN transistor 17 and by the anode of a second diode 18; said second diode 18 has its cathode connected to the ground. The fourth transistor 17 has its own collector terminal connected to the second terminal 5 and its emitter terminal connected to the ground.

The voltage source 13 can comprise at least two diodes 19a and 19b arranged in series.

The differential amplifier 3 allows to eliminate the difference in alternating voltage which is present between the terminals 2 and 5. The use of the capacitor 6 allows to obtain, at the input terminals of the differential amplifier, the alternating voltage at the terminals 2 and 5. The value of the capacitance of the capacitor can be advantageously reduced independently of the resistance value of the resistor 1. The differential amplifier 3 performs a voltage-current conversion with crossed differential output so as to conveniently allow bidirectionality to the circuit according to the invention and a constant and controlled current consumption.

This is particularly advantageous in the case of applications in the field of telephones, since in this field a constant absorption, which might otherwise change the impedance of the telephone line, is often required.

If, by way of example, we assume that in the circuital solution illustrated in figure 4 the resistor 1 has a resistance equal to 1 kohm and that the alternating voltage present either on the first terminal 2 or on the second terminal 5 has a peak value equal to 1 volt, it is obvious that the value of the current produced by the current source 10 multiplied by the current gain K (of the first or second current mirrors 4 or 7) must be greater than, or at the most equal to, 1 milliampere.

This current gain K is obtained by means of the emitter area ratio between the transistors 15 (17) and the respective diode 16 (18).

The differential amplifier operates in class A and the absorption of the circuit, even in the absence of signal, is constant and is equal to the product of the current generated by the current source 10 and the current gain K of the first or second current mirror 4 or 7.

A similar result is obtained by replacing the transistors as illustrated in figure 4 with the respective complementary transistors, i.e. a differential amplifier with NPN transistors and current mirrors with PNP transistors, or if N-channel and P-channel MOS transistors are used in both cases, following the indications given in figure 4.

What has been advantageously obtained is in practice an amplification of the capacitance, which despite remaining physically small, achieves results which are similar from the point of view of transfer but are better from the point of view of the reliability of said circuit.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Constant-absorption circuit for the bidirectional transfer of an alternating signal, characterized in that it comprises a resistor (1) having a first terminal (2) which is connected to a first input of a differential amplifier (3) and to an output of a first current mirror (7), said resistor (1) having a second terminal (5) which is connected to a capacitor (6), said capacitor (6) being further connected to a second input of said differential amplifier (3), said resistor (1) being connected with said second terminal (5) to an output of a second current mirror (7), said differential amplifier (3) having a first output connected to an input terminal of said second current mirror (7) and having a second output connected to an input terminal of said first current mirror (4), said differential amplifier (3), in cooperation with said first and second current mirrors (4,7), being suitable for transferring an alternating signal from the first terminal (2) to the second terminal (5) of said resistor (1) without attenuation and vice versa, and independently of the direct voltage drop across said resistor.

2. Circuit according to claim 1, characterized in that said differential amplifier (3) comprises a first PNP transistor (8) and a second PNP transistor (9), the respective emitter terminals whereof constitute a node which is connected to said first terminal (2) by means of a first current source (10), the base terminal of said first transistor (8) being connected to said first terminal (2) by means of a first biasing resistor (12), the collector terminal of said first transistor (8) being connected to an input terminal of said second current mirror (7), the base terminal of said second transistor (8) being connected to said first terminal (2) by means of a second biasing resistor (11) and being connected to said second terminal (5) through said capacitor (6), the collector terminal of said second transistor (9) being connected to the input of said first current mirror (4), a voltage source (13) being provided between said first and second biasing resistors (11,12) and said first terminal (2) and a second current source (14) being provided between said first and second biasing resistors (11,12) and the ground.

3. Circuit according to claim 2, characterized in that said voltage source (13) comprises at least two diodes (19a,19b) arranged in series.

4. Circuit according to claim 1 characterized in that said first current mirror (4) comprises an input which is composed of a node which is constituted by the base terminal of a third NPN transistor (15) and by the anode of a first diode (16) the cathode whereof is connected to the ground, said third transistor (15) having its own collector terminal connected to said first terminal (2) and its emitter terminal connected to the ground.

5. Circuit according to claim 1 characterized in that said second current mirror (7) comprises an input which is composed of a node which is constituted by the base terminal of a fourth NPN transistor (17) and by the anode of a second diode (18) the cathode whereof is connected to the ground, said fourth transistor (17) having its collector terminal connected to said second terminal (5) and its emitter terminal connected to the ground.

## Patentansprüche

1. Schaltung mit konstanter Absorption für bidirektionale Übertragung eines Wechselstromsignals,
dadurch gekennzeichnet, daß die Schaltung einen Widerstand (1) enthält, dessen erster Anschluß (2) mit dem ersten Eingang eines Differenzverstärkers (3) und dem Ausgang einer ersten Stromspiegelschaltung (4) verbunden ist,
daß der Widerstand (1) mit seinem zweiten Anschluß (5) an einen Kondensator (6) angeschlossen ist,
daß der Kondensator (6) weiter mit dem zweiten Eingang des Differenzverstärkers (3) verbunden ist,
daß der Widerstand (1) mit seinem zweiten Anschluß (5) an den Ausgang einer zweiten Stromspiegelschaltung (7) angeschlossen ist,
daß der Differenzverstärker (3) mit seinem ersten Ausgang mit dem Eingang der zweiten Stromspiegelschaltung (7) verbunden ist und mit seinem zweiten Ausgang mit dem Eingang der ersten Stromspiegslschsltung verbunden ist,
daß der Differenzverstärker (3) in Zusammenwirken mit der ersten und zweiten Stromspiegelschaltung (4, 7) geeignet ist, ein wechselförmiges Signal von dem ersten Anschluß (2) zu dem zweiten Anschluß (5) des Widerstandes (1) und in umgekehrter Richtung ohne Dämpfung zu übertragen, unabhängig von dem Gleichspannungsabfall an dem Widerstand (1).

2. Schaltung nach Anspruch 1,
dadurch gekennzeichnet, daß der Differenzverstärker (3) einen ersten PNP-Transistor (8) und einen zweiten PNP-Transistor (9) enthält,
daß deren Emitter-Anschlüsse einen Knoten bilden, welcher mittels einer ersten Spannungsquelle (10) mit dem ersten Anschluß (2) verbunden ist,
daß der Basisanschluß des ersten Transistors (8) mittels eines ersten Vorwiderstandes (12) mit dem ersten Anschluß (2) verbunden Ist,
daß der Kollektoranschluß des ersten Transistors (8) mit dem Eingangsanschluß der zweiten Stromspiegelschaltung (7) verbunden ist.
daß der Basisanschluß des zweiten Transistors (9) mittels eines zweiten Vorwiderstandes (11) mit dem ersten Anschluß (2) verbunden ist und mittels des Kondensators (6) mit dem zweiten Anschluß (5) verbunden ist,
daß der Kollektoranschluß des zweiten Transistors (9) mit dem Eingang der ersten Stromspiegelschaltung verbunden ist,
daß eine Stromquelle (13) zwischen dem ersten und zweiten Vorwiderstand (11, 12) und dem ersten Anschluß (2) vorgesehen ist und
daß eine zweite Stromquelle (14) zwischen dem ersten und zweiten Vorwiderstand (11, 12) und Masse vorgesehen ist,

3. Schaltung nach Anspruch 2,
dadurch gekennzeichnet, daß die Spannungsquelle (13) mindestens zwei in Serie geschaltete Dioden (19a, 19b) enthält.

4. Schaltung nach Anspruch 1,
dadurch gekennzeichnet, daß die erste Stromspiegelschaltung (4) einen Eingang enthält, der durch einen Knoten gebildet wird, welcher aus dem Basisanschluß eines dritten NPN-Transistors (15) und der Anode einer ersten Diode (16) gebildet wird, wobei die Kathode mit Masse verbunden ist,
daß der dritte Transistor (15) durch seinen Kollektoranschluß mit dem ersten Anschluß (2) verbunden ist und durch seinen Emitteranschluß mit Masse verbunden ist.

5. Schaltung nach Anspruch 1,
dadurch gekennzeichnet, daß die zweite Stromspiegelscheltung (7) einen Eingang enthält, der durch einen Knoten aufgebaut ist, welcher durch den Basisanschluß eines vierten NPN-Transistors (17) und der Anode einer zweiten Diode (18) gebildet wird, wobei die Kathode mit Masse verbunden ist,
daß der vierte Transistor (17) durch seinen Kolloktoranschluß mit dem zweiten Anschluß (5) verbunden ist und durch seinen Emitteranschluß mit Masse verbunden ist.

## Revendications

1. Circuit à absorption constante pour le transfert bidirectionnel d'un signal alternatif, caractérisé en ce qu'il comprend une résistance (1) dont une première borne (2) est connectée à une première entrée d'un amplificateur différentiel (3) et à la sortie d'un premier miroir de courant (7), la résistance (1) ayant une seconde borne (5) qui est connectée à un condensateur (6), le condensateur (6) étant en outre connecté à une seconde entrée de l'amplificateur différentiel (3), la résistance (1) étant connectée par ladite seconde borne (5) à une sortie d'un second miroir de courant (7), l'amplificateur différentiel (3) ayant une première sortie connectée à une borne d'entrée du second miroir de courant (7) et ayant une seconde sortie connectée à une borne d'entrée du premier miroir de courant (4), l'amplificateur différentiel (3), en combinaison avec les premier et second miroirs de courant (4, 7), étant propre à transférer un signal alternatif de la première borne (2) à la seconde borne (5) de la résistance (1) sans atténuation, et réciproquement, et quelle que soit la chute de tension en continu aux bornes de la résistance.

2. Circuit selon la revendication 1, caractérisé en ce que l'amplificateur différentiel (3) comprend un premier transistor PNP (8) et un deuxième transistor PNP (9), dont les bornes d'émetteur respectives constituent un noeud qui est connecté à ladite première borne (2) par une première source de courant (10), la borne de base du premier transistor (8) étant connectée à la première borne (2) par une première résistance de polarisation (12), la borne de collecteur du premier transistor (8) étant connectée à une borne d'entrée du second miroir de courant (7), la borne de base du second transistor (8) étant connectée à la première borne (2) par une seconde résistance de polarisation (11) et étant connectée à la seconde borne (5) par le condensateur (6), la borne de collecteur du deuxième transistor (9) étant connectée à l'entrée du premier miroir de courant (4), une source de tension (13) étant connectée entre les première et seconde résistances de polarisation (11, 12) et la première borne (2), et une seconde source de courant (14) étant connectée entre les première et seconde résistances de polarisation (11, 12) et la masse.

3. Circuit selon la revendication 2, caractérisé en ce que la source de tension (13) comprend au moins deux diodes (19a, 19b) montées en série.

4. Circuit selon la revendication 1, caractérisé en ce que le premier miroir de courant (4) a une entrée qui est formée d'un noeud constitué de la borne de base d'un troisième transistor NPN (15) et de l'anode d'une première diode (16) dont la cathode est connectée à la masse, le troisième transistor (15) ayant une borne de collecteur connectée à la première borne (2) et une borne d'émetteur connectée à la masse.

5. Circuit selon la revendication 1, caractérisé en ce que le second miroir de courant (7) a une entrée qui est formée d'un noeud constitué de la borne de base d'un quatrième transistor NPN (17) et de l'anode d'une seconde diode (18) dont la cathode est connectée à la masse, le quatrième transistor (17) ayant une borne de collecteur connectée à la seconde borne (5) et une borne d'émetteur connectée à la masse.
